# FASCICULE DE BREVET EUROPEEN

(11) **EP 0 845 395 B1**
(45) Date de publication et mention de la délivrance du brevet: **12.03.2003**
(21) Numéro de dépôt: 97120927.5
(22) Date de dépôt: 28.11.1997
(51) Int. Cl.: B60S 1/52

(54) **Essuie-glace de véhicule automobile comportant un dispositif perfectionné de projection de liquide de lavage**
Scheibenwischer für Kraftfahrzeuge mit einer verbesserten Sprühvorrichtung für die Waschflüssigkeit
Windscreen wiper for vehicle with an improved spray device for washing liquid

(30) Priorité: 29.11.1996 FR 9614650
(43) Date de publication de la demande: 03.06.1998
(73) Titulaire: VALEO SYSTEMES D'ESSUYAGE, 78321 La Verrière (FR)
(72) Inventeur: Lefrançois, Laurent, 63500 Issoire (FR); Roumegoux, Jean-Louis, 75116 Paris (FR)
(74) Mandataire: Gamonal, Didier

(56) Documents cités:
- EP-A- 0 566 470
- FR-A- 2 603 850
- FR-A- 2 747 981
- US-A- 3 973 732
- US-A- 4 273 286

## Description

L'invention concerne un essuie-glace de véhicule automobile comportant des moyens perfectionnés d'accrochage d'une canalisation d'alimentation en liquide de lavage.

L'invention concerne plus particulièrement un essuie-glace de véhicule automobile, du type dans lequel un dispositif de projection de liquide de lavage, qui comporte notamment une canalisation d'alimentation tubulaire et au moins un organe de projection du liquide en direction d'une vitre à essuyer, est porté par l'essuie-glace, et du type dans lequel il est prévu au moins une agrafe d'accrochage de la canalisation sur l'essuie-glace.

Il est particulièrement intéressant de disposer un dispositif de projection de liquide de lavage directement sur l'essuie-glace et non pas sur un panneau de carrosserie proche de la vitre à essuyer.

En effet, la projection de liquide se fait ainsi au plus près de la vitre, ce qui évite notamment que le jet de liquide ne soit dévié par les filets d'air qui s'écoulent le long de la vitre lorsque le véhicule roule à haute vitesse.

Par ailleurs, le dispositif de projection porté par l'essuie-glace balaye la surface de la vitre en même temps que celui-ci, ce qui permet d'obtenir une distribution plus homogène du liquide sur la vitre.

Toutefois, les dispositifs de projection portés par l'essuie-glace doivent être alimentés en liquide de lavage sous pression par une canalisation d'alimentation qui s'étend le long de l'essuie-glace et qui est reliée à un dispositif d'alimentation agencé généralement à l'intérieur du véhicule. il est donc nécessaire d'accrocher la canalisation le long du bras de l'essuie-glace, et éventuellement sur le balai, et l'on utilise à cet effet divers moyens de fixation tels que des agrafes qui entourent au moins partiellement la canalisation et le bras pour maintenir la canalisation.

Par ailleurs, dans certains cas, les dispositifs de projection de liquide de lavage, qui sont agencés par exemple sur le balai d'essuie-glace, ne couvrent qu'une partie de la surface à nettoyer, et ce notamment du fait qu'ils sont très proches de la vitre, ce qui réduit la surface effectivement atteinte par le jet de liquide.

Aussi, il est parfois nécessaire de prévoir plusieurs dispositifs de projection, soit sous la forme d'une rampe d'arrosage de grandes dimensions, soit sous la forme de plusieurs gicleurs répartis le long de l'essuie-glace.

Dans tous les cas, la fixation de ces dispositifs de projection est un problème important.

Les dispositifs de projection connus sont décrits notemment dans le document EP-A-0 566 470.

Aussi, l'invention propose un essuie-glace selon la revendication 1.

Selon des modes de réalisation de l'invention :
- l'aiguille débouche à ses deux extrémités d'une part à l'intérieur de la canalisation et d'autre part dans une cavité de distribution qui est formée dans l'agrafe d'accrochage et qui est munie d'au moins un orifice d'aspersion ;
- l'aiguille débouche à ses deux extrémités d'une part à l'intérieur de la canalisation et d'autre part à l'extérieur en direction d'une vitre à essuyer pour former un organe de projection de liquide de lavage ;
- la canalisation est engagée dans un logement de l'agrafe, et l'aiguille est portée par un volet qui est rabattu pour permettre à l'aiguille de transpercer la canalisation ;
- une extrémité libre de la canalisation est engagée dans un logement de l'agrafe ;
- l'extrémité libre de la canalisation est débouchante, et le logement de l'agrafe comporte au moins un orifice d'aspersion de liquide de lavage ;
- l'aiguille est réalisée venue de matière avec l'agrafe ;
- l'aiguille est réalisée sous la forme d'une pièce indépendante autour de laquelle l'agrafe est surmoulée par moulage d'une matière plastique ;
- l'aiguille est réalisée sous la forme d'une pièce rapportée qui est insérée dans l'agrafe après l'accrochage de la canalisation sur l'essuie-glace à l'aide de l'agrafe ;
- l'agrafe est montée par emboîtement élastique sur un bras d'essuie-glace ;
- l'agrafe comporte une patte de fixation articulée qui entoure un bras d'essuie-glace et qui comporte des moyens de verrouillage par emboîtement élastique sur un corps principal de l'agrafe ;
- l'agrafe est réalisée sous la forme de deux pièces indépendantes qui comportent des moyens d'emboîtement élastique pour leur assemblage, et les deux pièces en position assemblée enserrent un bras de l'essuie-glace et la canalisation ;
- l'agrafe comporte un cavalier en forme de U ouvert en direction de la vitre qui est destiné à chevaucher un balai d'essuie-glace pour en assurer le guidage.

D'autres caractéristiques et avantages de l'invention apparaîtront à la lecture de la description détaillée qui suit pour la compréhension de laquelle on se reportera aux dessins annexés dans lesquels :
- la figure 1 est une vue partielle en perspective avec arrachement d'un essuie-glace de véhicule automobile comportant une agrafe d'accrochage d'une canalisation d'alimentation de liquide de lavage conforme aux enseignements de l'invention ;
- la figure 2 est une vue en coupe transversale de l'agrafe, du bras et de la canalisation de la figure 1 ;
- la figure 3 est une vue en perspective illustrant le montage d'un deuxième mode de réalisation d'une agrafe selon l'invention ;
- les figures 4 et 5 sont des vues de l'agrafe de la figure 2 en position montée, respectivement en perspective et en coupe par un plan transversal ;
- les figures 6 et 7 illustrent un troisième mode de réalisation de l'invention, respectivement en perspective avec arrachement et en coupe par un plan transversal ;
- la figure 8 est une vue en perspective illustrant le montage d'un quatrième mode de réalisation de l'invention ; et
- les figures 9 et 10 illustrent l'agrafe de la figure 8 en position montée, respectivement en perspective et en coupe par un plan longitudinal de l'essuie-glace.

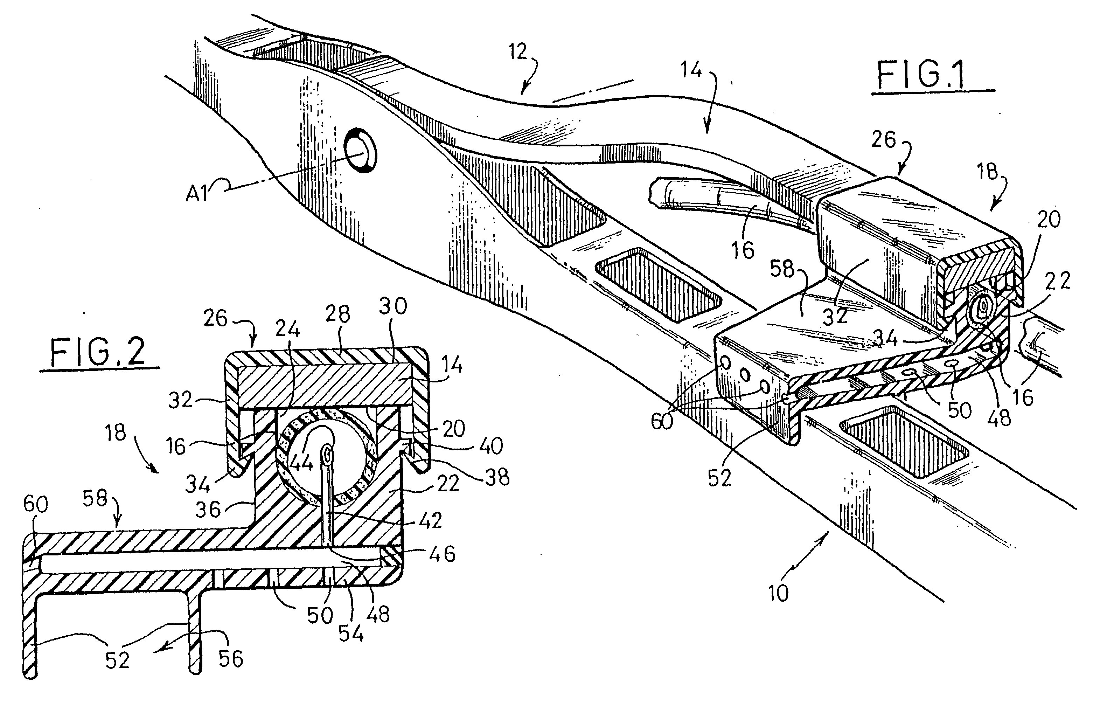

On a représenté sur la figure 1 une partie d'un essuie-glace de véhicule automobile. Dans un tel essuie-glace, un balai d'essuie-glace 10 est monté articulé autour d'un axe transversal A1 à l'extrémité libre 12 d'un bras d'essuie-glace 14.

Dans cet exemple de réalisation, l'essuie-glace 10 porte un dispositif de projection de liquide de lavage qui est alimenté par une canalisation d'alimentation 16 qui s'étend le long du bras 14 pour être relié à un dispositif d'alimentation en liquide de lavage sous pression (non représenté) agencé généralement à l'intérieur du véhicule. La canalisation 16 est fixée le long du bras 14 à l'aide d'une agrafe 18 conforme aux enseignements de l'invention.

Dans les exemples de réalisation de l'invention représentés sur les figures 1 et 2, le bras 14 est réalisé sous la forme d'une tige métallique de section rectangulaire et la canalisation 16 s'étend le long d'une face inférieure 20 du bras 14.

L'agrafe 18 comporte un corps inférieur 22 qui est muni d'un logement 24 qui s'étend longitudinalement sur la longueur de l'agrafe 18 et dont les dimensions en section transversale sont sensiblement égales à celles de la canalisation 16. Le logement 24 est ouvert vers le haut de sorte que, lorsque la canalisation 16 est reçue à l'intérieur du logement 24 et que le corps inférieur 22 de l'agrafe 18 est plaqué contre la face inférieure 20 du bras 14, la canalisation 16 est prisonnière à l'intérieur du logement 24.

Pour la fixation de l'agrafe 18, il est prévu un corps supérieur 26 d'agrafe qui comporte essentiellement une plaque transversale supérieure 28 en appui contre une face supérieure 30 du bras 14 et deux ailes latérales longitudinales 32 qui s'étendent verticalement vers le bas, en dessous de la surface inférieure 20 du bras 14, de telle sorte que leur bord inférieur libre 34 soit agencé en regard respectivement de deux faces latérales longitudinales opposées 36 du corps inférieur 22 de l'agrafe 18.

Les bords inférieurs 34 des ailes 32 comportent chacun un bec 38 qui s'étend transversalement vers l'intérieur et qui est destiné à coopérer avec un rebord 40 tourné vers le bas, agencé sur les faces latérales 36 du corps inférieur 22 pour permettre le verrouillage des deux corps supérieur 26 et inférieur 22 de l'agrafe 18 lors du montage de ceux-ci sur le bras 14.

Conformément aux enseignements de l'invention, l'agrafe 18 comporte une aiguille creuse 42 qui est destinée à transpercer la paroi de la canalisation 16. L'aiguille 42 est ici réalisée par exemple en métal et le corps inférieur 22 de l'agrafe 18 est surmoulé autour de l'aiguille 42 par moulage d'une matière plastique de telle sorte que l'aiguille 42 s'étend sensiblement verticalement par rapport au corps inférieur 22 de l'agrafe.

L'extrémité supérieure 44 de l'aiguille creuse 42, qui est effilée, s'étend à l'intérieur du logement 24 prévu pour recevoir la canalisation 16 tandis que l'extrémité inférieure 46 de l'aiguille 42 débouche dans une cavité interne 48 formée dans le corps inférieur 22 de l'agrafe 18. La cavité 48 est munie d'une série d'orifices d'aspersion 50 qui sont tournés en direction de la vitre.

Lors de l'accrochage de la canalisation 16 sur le bras 14 à l'aide de l'agrafe 18, l'extrémité supérieure effilée 44 de l'aiguille 42 transperce la canalisation 16 soit au moment où la canalisation est introduite dans le logement 24 du corps inférieur 22, soit lorsque les deux corps inférieur 22 et supérieur 26 de l'agrafe 18 sont assemblés, ce qui a pour effet de comprimer la canalisation 16 entre la face inférieure 20 du bras 14 et l'extrémité supérieure 44 de l'aiguille 42, selon une direction parallèle à l'orientation de l'aiguille 42.

Ainsi, l'extrémité supérieure 44 de l'aiguille est à même de prélever dans la canalisation 16 du liquide de lavage sous pression fourni par le dispositif d'alimentation. Le liquide est alors transféré vers la cavité interne 48 puis distribué au travers des orifices 50 en direction de la vitre à essuyer.

Dans l'exemple de réalisation représenté sur les figures 1 et 2, le corps inférieur 22 de l'agrafe 18 comporte également deux flancs longitudinaux parallèles 52 qui s'étendent verticalement vers le bas depuis une face inférieure 54 du corps inférieur 22 pour former un cavalier 56 ouvert vers le bas en direction de la vitre.

Comme on peut le voir plus particulièrement sur la figure 1, le cavalier 56 est destiné à chevaucher le balai d'essuie-glace 10 afin d'en assurer un guidage selon la direction transversale.

Dans l'exemple de réalisation qui est représenté sur les figures, le tronçon du bras 14 sur lequel est fixée l'agrafe 18 est décalé transversalement par rapport au plan longitudinal du balai 10 si bien que le cavalier 56 est formé à une extrémité d'une excroissance transversale 58 du corps inférieur 22 de l'agrafe 18. Avantageusement, la cavité interne 48 du corps inférieur 22 s'étend à l'intérieur de l'excroissance 58 et il est prévu des orifices d'aspersion complémentaires 60 agencés dans une face latérale de l'excroissance 58 de telle manière que le liquide de lavage est susceptible d'être distribué des deux côtés du balai d'essuie-glace 10.

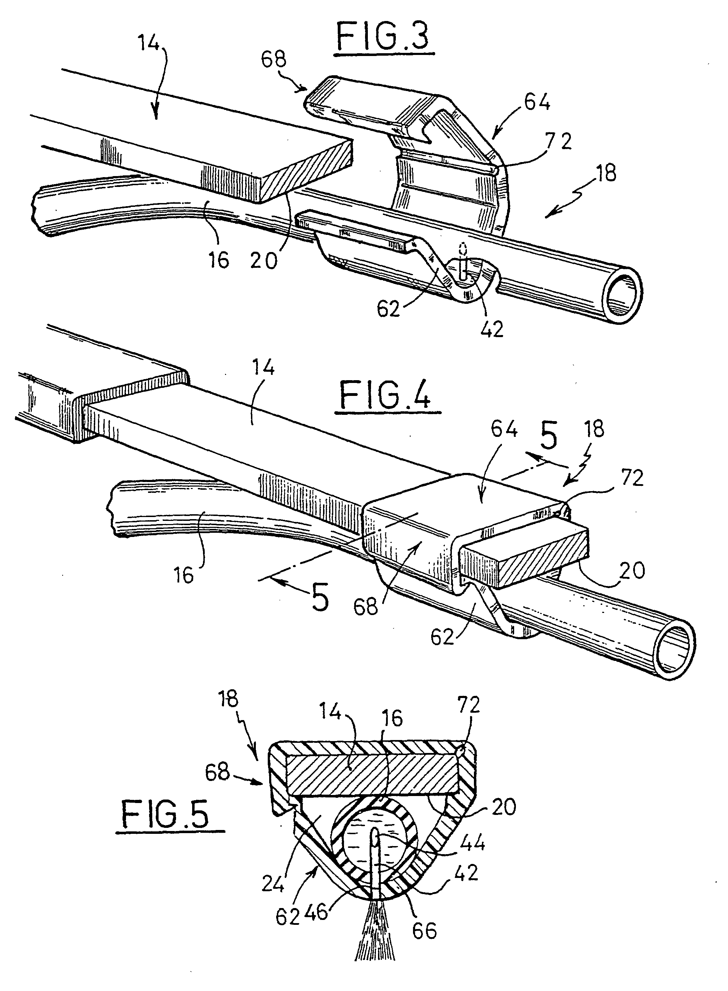

On a représenté sur les figures 3 à 5 un deuxième mode de réalisation de l'invention dans lequel l'agrafe 18 comporte un corps principal 62 qui, lorsqu'il est plaqué contre la surface inférieure 20 du bras 14, délimite un logement 24 sensiblement en forme de V ouvert vers le haut dans lequel la canalisation 16 est maintenue lorsque l'agrafe 18 est fixée sur le bras 14.

Le corps principal 62 comporte ainsi deux plaques longitudinales qui sont réunies par leur bord inférieur et dont le bord supérieur est destiné à venir en appui contre la face inférieure 20 du bras 14.

Le corps principal 62 est surmoulé autour d'une aiguille creuse 42 de telle sorte que l'aiguille 42 s'étend sensiblement verticalement depuis le fond du logement 24 en V qui est formé par les bords inférieurs réunis des deux plaques du corps principal 62. L'extrémité supérieure effilée 44 de l'aiguille 42 est agencée sensiblement au centre du logement 24 tandis que l'extrémité inférieure 46 de l'aiguille 42 débouche directement vers l'extérieur dans une face externe 66 du corps principal 62. Ainsi, le liquide prélevé dans la canalisation 16 par l'aiguille 42 est directement projeté en direction de la vitre.

Pour sa fixation sur le bras 14, l'agrafe 18 comporte une patte de fixation 64 qui est articulée autour d'un axe longitudinal sur un bord supérieur de l'une des plaques du corps principal 62 de manière à pouvoir rabattre la patte de fixation 64 contre la face supérieure du bras 14 et de telle sorte qu'une extrémité libre 68 de la patte 64 puisse coopérer avec le bord supérieur de l'autre plaque du corps principal 62.

Dans cet exemple de réalisation, la patte 64 est réalisée venue de matière avec le corps principal 62 et leur articulation autour d'un axe longitudinal est réalisée sous la forme d'une bande de matière d'épaisseur réduite 72.

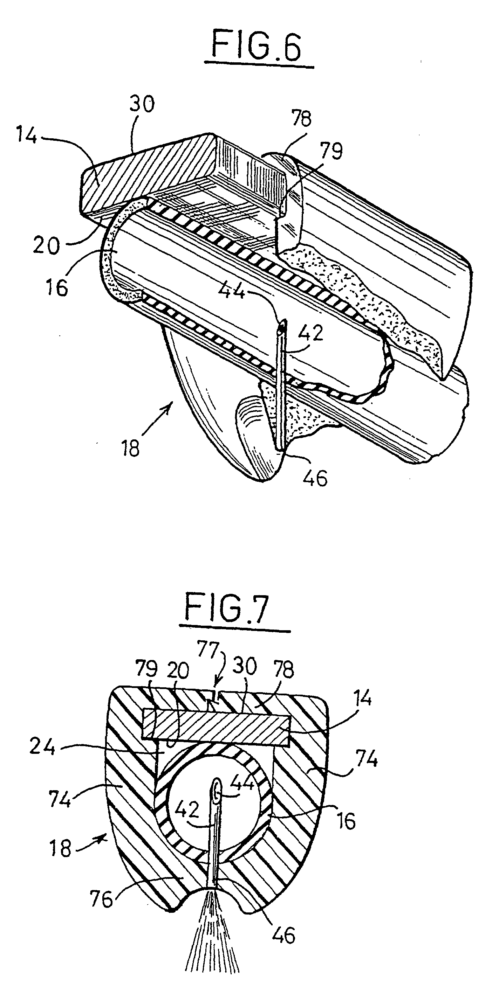

On a représenté sur les figures 6 et 7 un troisième mode de réalisation de l'invention dans lequel l'agrafe 18 est réalisée en une seule pièce qui comporte deux parois latérales 74 qui délimitent un logement 24 sensiblement en forme de U ouvert vers le haut pour recevoir la canalisation 16 et qui sont réunies à leur extrémité inférieure par une bande de matière 76 dont l'épaisseur permet, à la manière d'une articulation, que les deux parois 74 soient écartées l'une de l'autre.

En effet, chacune des parois 74 est munie à son extrémité supérieure d'un rebord transversal 78 qui est destiné à prendre appui contre une face supérieure 30 du bras 14 tandis les parois 74 sont par ailleurs en appui par un décrochement transversal 79 contre la face inférieure du bras 14.

Comme on peut le voir plus particulièrement sur la figure 7, les deux rebords transversaux 78 des deux parois 74 se rejoignent et coopèrent par des moyens d'emboîtement élastique 77 pour empêcher tout écartement indésirable des deux parois 74.

Comme dans le mode de réalisation précédent, l'agrafe 18 est surmoulée autour d'une aiguille creuse 42 sensiblement verticale dont l'extrémité supérieure effilée 44 est agencée sensiblement au centre du logement 24 pour transpercer la canalisation 16, et dont l'extrémité inférieure 46 débouche directement vers l'extérieur dans une face externe de l'agrafe, en direction de la vitre.

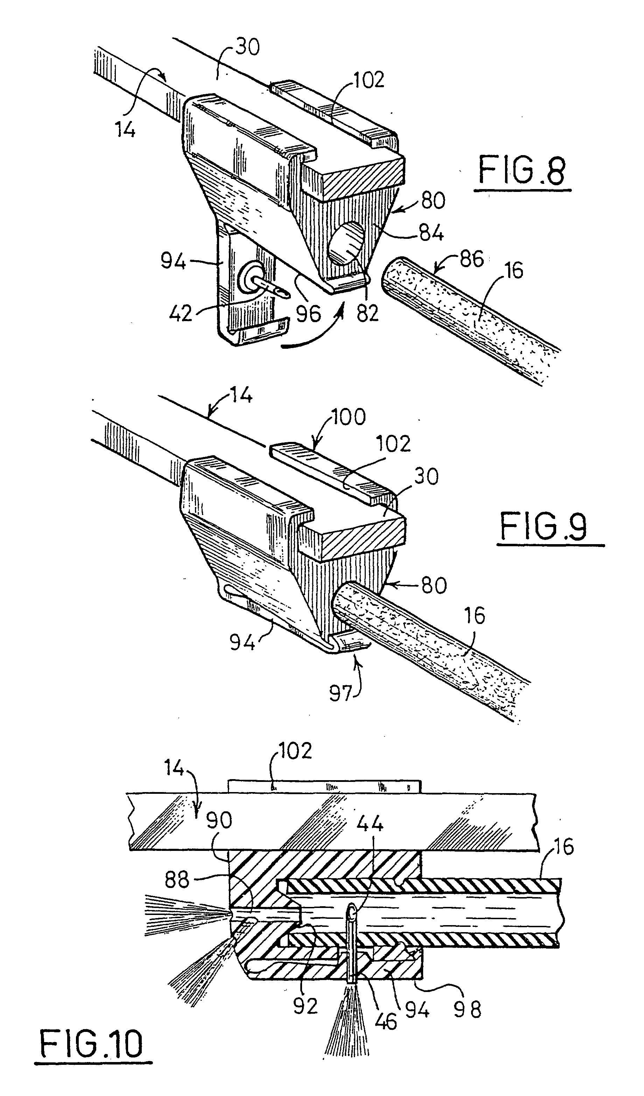

On a représenté sur les figures 8 à 10 un quatrième mode de réalisation de l'invention.

L'agrafe 18 qui est représentée sur ces figures comporte un corps principal 80 dont la forme en section transversale est sensiblement celle d'un trapèze dont la grande base est en appui contre la face inférieure du bras 14.

Le corps principal 80 est muni d'un logement cylindrique 82 d'axe longitudinal sensiblement parallèle au bras 14. Le logement cylindrique 82 débouche dans une face transversale arrière 84 du corps principal 80, du côté opposé à l'extrémité libre 12 du bras 14 sur laquelle est accroché le balai 10.

Comme on peut le voir plus particulièrement sur la figure 10, le logement cylindrique 82 est destiné à recevoir une extrémité libre 86 de la canalisation 16. En effet, le logement 82 n'est pas débouchant vers l'avant, seul un orifice d'aspersion 88 étant aménagé dans le corps principal 80 de manière à déboucher axialement, d'une part dans le logement cylindrique 82 et, d'autre part dans une face transversale avant 90 du corps principal 80. Ainsi, lorsque l'extrémité libre 86 de la canalisation 16 est engagée au fond du logement cylindrique 82, du liquide de lavage est susceptible d'être projeté en direction de la vitre au travers de l'orifice 88.

Comme on peut le voir sur la figure 10, une paroi transversale de fond du logement 82 comporte un bossage conique axial 92 qui permet de réaliser un centrage et une étanchéité entre l'extrémité 86 de la canalisation 16 et le logement 82. L'orifice d'aspersion 88, qui est agencé axialement dans le bossage en forme de cône 92, débouche ainsi directement à l'intérieur de l'extrémité 86 de la canalisation 16 lorsque celle-ci est emmanchée au fond du logement 82.

Par ailleurs, l'agrafe 18 comporte un volet 94 qui est articulé autour d'un axe transversal sensiblement horizontal, à l'avant d'une paroi inférieure 96 du corps principal 80. Le volet 94 est destiné à être rabattu en position horizontale contre la paroi inférieure 96 et il comporte des moyens de verrouillage 97 dans cette position.

Le volet 94 porte une aiguille creuse 42 qui, lorsque le volet 94 est en position rabattue représentée aux figures 9 et 10, est agencée verticalement de manière à ce que son extrémité supérieure 44 soit reçue à l'intérieur de la canalisation 16 après en avoir transpercé la paroi et de telle sorte que son extrémité inférieure 46 débouche en dessous d'une face inférieure 98 du volet 94 pour projeter du liquide de lavage en direction de la vitre. L'aiguille 42 est alors reçue au travers d'un orifice qui est aménagé dans la paroi inférieure 96 du corps 80 de manière à déboucher vers l'intérieur dans le logement cylindrique 82.

Ainsi, l'aiguille creuse 42, dont l'extrémité inférieure 46 débouche directement en direction de la vitre, forme un orifice complémentaire de projection de liquide de lavage et elle permet aussi d'assurer le maintien selon la direction axiale de la canalisation 16 dans le logement cylindrique 82.

Pour sa fixation sur le bras 14, l'agrafe 18 comporte deux pattes de fixation en équerre 100 qui s'étendent vers le haut de chaque côté du bras 14 et dont un rebord transversal 102 coopère avec la face supérieure 30 du bras 14.

## Revendications

1. Essuie-glace de véhicule automobile, du type dans lequel un dispositif de projection de liquide de lavage, qui comporte notamment une canalisation d'alimentation tubulaire (16) et au moins un organe de projection du liquide en direction d'une vitre à essuyer, est porté par l'essuie-glace, et du type dans lequel il est prévu au moins une agrafe (18) d'accrochage de la canalisation (16) sur l'essuie-glace,
**caractérisé en ce que** l'agrafe (18) comporte une aiguille creuse (42) qui transperce la paroi de la canalisation (16) et qui alimente l'organe de projection (46, 48) de liquide de lavage, l'aiguille présentant une extrémité reçue a l'intérieur de la canalisation (16) après en avoir transpercé la paroi, son autre extrémité débouchant soit dans une cavité interne (48) de l'agrafe munie d'orifices d'aspersion soit directement en dessous de l'agrafe pour projeter du liquide de lavage sur la vitre.

2. Essuie-glace selon la revendication 1, **caractérisé en ce que** l'aiguille (42) débouche à ses deux extrémités d'une part à l'intérieur de la canalisation (16) et d'autre part dans une cavité de distribution (48) qui est formée dans l'agrafe d'accrochage (18) et qui est munie d'au moins un orifice d'aspersion (50, 60).

3. Essuie-glace selon la revendication 1, **caractérisé en ce que** l'aiguille (42) débouche à ses deux extrémités d'une part à l'intérieur de la canalisation (16) et d'autre part à l'extérieur en direction d'une vitre à essuyer pour former un organe de projection de liquide de lavage.

4. Essuie-glace selon l'une quelconque des revendications précédentes, **caractérisé en ce que** la canalisation (16) est engagée dans un logement (82) de l'agrafe (18), et **en ce que** l'aiguille (42) est portée par un volet (94) qui est rabattu pour permettre à l'aiguille (42) de transpercer la canalisation (16).

5. Essuie-glace selon l'une quelconque des revendications précédentes, **caractérisé en ce qu'**une extrémité libre (86) de la canalisation (16) est engagée dans un logement (82) de l'agrafe (18).

6. Essuie-glace selon la revendication 5, **caractérisé en ce que** l'extrémité libre (86) de la canalisation (16) est débouchante, et **en ce que** le logement (82) de l'agrafe (18) comporte au moins un orifice d'aspersion (88) de liquide de lavage.

7. Essuie-glace selon l'une quelconque des revendications précédentes, **caractérisé en ce que** l'aiguille (42) est réalisée venue de matière avec l'agrafe.

8. Essuie-glace selon l'une quelconque des revendications 1 à 6, **caractérisé en ce que** l'aiguille (42) est réalisée sous la forme d'une pièce indépendante autour de laquelle l'agrafe (18) est surmoulée par moulage d'une matière plastique.

9. Essuie-glace selon l'une quelconque des revendications 1 à 6, **caractérisé en ce que** l'aiguille (42) est réalisée sous la forme d'une pièce rapportée qui est insérée dans l'agrafé après l'accrochage de la canalisation sur l'essuie-glace à l'aide de l'agrafe.

10. Essuie-glace selon l'une quelconque des revendications précédentes, **caractérisé en ce que** l'agrafe (18) est montée par emboîtement élastique sur un bras (14) de l'essuie-glace.

11. Essuie-glace selon l'une quelconque des revendications 1 à 9, **caractérisé en ce que** l'agrafe (18) comporte une patte de fixation (64) articulée qui entoure un bras (14) de l'essuie-glace et qui comporte des moyens de verrouillage par emboîtement élastique sur un corps principal (62) de l'agrafe (18).

12. Essuie-glace selon l'une quelconque des revendications 1 à 9, **caractérisé en ce que** l'agrafe (18) est réalisée sous la forme de deux pièces indépendantes (22, 26) qui comportent des moyens d'emboîtement élastique (38, 40) pour leur assemblage, et **en ce que** les deux pièces (26, 28) en position assemblée enserrent un bras (14) de l'essuie-glace et la canalisation (16).

13. Essuie-glace selon l'une quelconque des revendications précédentes, **caractérisé en ce que** l'agrafe (18) comporte un cavalier (56) en forme de U ouvert en direction de la vitre qui est destiné à chevaucher un balai d'essuie-glace (10) pour en assurer le guidage.

## Claims

1. A motor vehicle windscreen wiper, of the type in which a washing liquid spraying device, which has in particular a tubular supply duct (16) and at least one member for spraying the liquid in the direction of a window to be wiped, is carried by the windscreen wiper, and of the type in which at least one clip (18) is provided for attaching the duct (16) onto the windscreen wiper,
**characterised in that** the clip (18) has a hollow needle (42) which pierces the wall of the duct (16) and which supplies the washing liquid spraying member (46, 48), the needle having one end accommodated inside the duct (16) after having pierced the wall thereof, its other end opening either into an internal cavity (48) in the clip provided with spraying apertures or directly below the clip in order to spray washing liquid on the window.

2. A windscreen wiper according to Claim 1, **characterised in that** the needle (42) opens at its two ends on the one hand inside the duct (16) and on the other hand into a distribution cavity (48) which is formed in the attachment clip (18) and which is provided with at least one spraying aperture (50, 60).

3. A windscreen wiper according to Claim 1, **characterised in that** the needle (42) opens at its two ends on the one hand inside the duct (16) and on the other hand outside in the direction of a window to be wiped in order to form a washing liquid spraying member.

4. A windscreen wiper according to any one of the preceding claims, **characterised in that** the duct (16) is fitted into a housing (82) in the clip (18), and **in that** the needle (42) is carried by a flap (94) which is closed down in order to allow the needle (42) to pierce the duct (16).

5. A windscreen wiper according to any one of the preceding claims, **characterised in that** a free end (86) of the duct (16) is fitted into a housing (82) in the clip (18).

6. A windscreen wiper according to Claim 5, **characterised in that** the free end (86) of the duct (16) is open, and **in that** the housing (82) in the clip (18) has at least one washing liquid spraying aperture (88).

7. A windscreen wiper according to any one of the preceding claims, **characterised in that** the needle (42) is made in one piece of material with the clip.

8. A windscreen wiper according to any one of Claims 1 to 6, **characterised in that** the needle (42) is made in the form of an independent part around which the clip (18) is overmoulded by moulding of a plastic material.

9. A windscreen wiper according to any one of Claims 1 to 6, **characterised in that** the needle (42) is made in the form of an added-on part which is inserted into the clip after attachment of the duct onto the windscreen wiper by means of the clip.

10. A windscreen wiper according to any one of the preceding claims, **characterised in that** the clip (18) is mounted by flexible interlocking on an arm (14) of the windscreen wiper.

11. A windscreen wiper according to any one of Claims 1 to 9, **characterised in that** the clip (18) has an articulated fixing tab (64) which surrounds an arm (14) of the windscreen wiper and which has means for locking by flexible interlocking on a main body (62) of the clip (18).

12. A windscreen wiper according to any one of Claims 1 to 9, **characterised in that** the clip (18) is made in the form of two independent parts (22, 26) which have means of flexible interlocking (38, 40) for their assembly, and **in that** the two parts (26, 28) in the assembled position encircle an arm (14) of the windscreen wiper and the duct (16).

13. A windscreen wiper according to any one of the preceding claims, **characterised in that** the clip (18) has a U-shaped rider (56) open in the direction of the window which is intended to straddle a windscreen wiper blade (10) in order to provide the guidance thereof.

## Patentansprüche

1. Scheibenwischer eines Kraftfahrzeugs, bei dem eine Spritzvorrichtung von Waschflüssigkeit, die insbesondere eine rohrförmige Versorgungsleitung (16) und mindestens ein Spritzorgan der Flüssigkeit in Richtung einer zu wischenden Scheibe umfasst, vom Scheibenwischer getragen wird, und bei dem mindestens eine Einhakklammer (18) der Leitung (16) am Scheibenwischer vorgesehen ist, **dadurch gekennzeichnet, dass** die Klammer (18) eine hohle Nadel (42) umfasst, die die Wand der Leitung (16) durchstößt, und die das Spritzorgan (46, 48) mit Waschflüssigkeit versorgt, wobei die Nadel ein in die Leitung (16) eindringendes Ende umfasst, nachdem sie die Wand durchstoßen hat, während ihr anderes Ende entweder in eine interne Vertiefung (48) der Klammer mündet, die Berieselungsöffnungen aufweist, oder direkt unter der Klammer, um Waschflüssigkeit auf die Scheibe zu spritzen.

2. Scheibenwischer nach Anspruch 1, **dadurch gekennzeichnet, dass** die Nadel (42) mit ihren beiden Enden einerseits in die Leitung (16) und andererseits in eine Verteilungsvertiefung (48) mündet, die in der Einhakklammer (18) ausgebildet ist und mindestens eine Berieselungsöffnung (50, 60) aufweist.

3. Scheibenwischer nach Anspruch 1, **dadurch gekennzeichnet, dass** die Nadel (42) mit ihren beiden Enden einerseits in die Leitung (16) und andererseits außerhalb in Richtung einer zu wischenden Scheibe mündet, um ein Spritzorgan von Waschflüssigkeit zu bilden.

4. Scheibenwischer nach einem der vorherigen Ansprüche, **dadurch gekennzeichnet, dass** die Leitung (16) in eine Aufnahme (82) der Klammer (18) eingeführt ist, und dass die Nadel (42) von einer Klappe (94) getragen wird, die umgeklappt wird, um der Nadel (42) zu ermöglichen, die Leitung (16) zu durchbohren.

5. Scheibenwischer nach einem der vorherigen Ansprüche, **dadurch gekennzeichnet, dass** ein freies Ende (86) der Leitung (16) in eine Aufnahme (82) der Klammer (18) eingeführt ist.

6. Scheibenwischer nach Anspruch 5, **dadurch gekennzeichnet, dass** das freie Ende (56) der Leitung (16) geöffnet ist, und dass die Aufnahme (82) der Klammer (18) mindestens eine Berieselungsöffnung (88) für Waschflüssigkeit umfasst.

7. Scheibenwischer nach einem der vorherigen Ansprüche, **dadurch gekennzeichnet, dass** die Nadel (42) aus dem gleichen Material besteht wie die Klammer.

8. Scheibenwischer nach einem der Ansprüche 1 bis 6, **dadurch gekennzeichnet, dass** die Nadel (42) aus einem unabhängigen Teil besteht, um den herum die Klammer (18) durch Formen eines Kunststoffs angeformt ist.

9. Scheibenwischer nach einem der Ansprüche 1 bis 6, **dadurch gekennzeichnet, dass** die Nadel (42) aus einem angesetzten Teil besteht, der nach dem Einhaken der Leitung am Scheibenwischer mittels der Klammer in die Klammer eingefügt wird.

10. Scheibenwischer nach einem der vorherigen Ansprüche, **dadurch gekennzeichnet, dass** die Klammer (18) federnd in einen Scheibenwischerarm (14) eingesteckt wird.

11. Scheibenwischer nach einem der Ansprüche 1 bis 9, **dadurch gekennzeichnet, dass** die Klammer (18) eine gelenkige Befestigungslasche (64) umfasst, die einen Scheibenwischerarm (14) umgibt und die Verriegelungsmittel durch federndes Einstecken in einen Hauptkörper (62) der Klammer (18) umfasst.

12. Scheibenwischer nach einem der Ansprüche 1 bis 9, **dadurch gekennzeichnet, dass** die Klammer (18) aus zwei unabhängigen Teilen (22, 26) besteht, die für ihren Zusammenbau federnde Einsteckmittel (38, 40) umfassen, und dass die beiden Teile (26, 28) in zusammengebauter Position einen Scheibenwischerarm (14) und die Leitung (16) einklemmen.

13. Scheibenwischer nach einem der vorherigen Ansprüche, **dadurch gekennzeichnet, dass** die Klammer (18) einen Reiter (56) in Form eines in Richtung der Scheibe geöffneten U umfasst, der auf ein Wischerblatt (10) aufgesetzt werden soll, um seine Führung zu gewährleisten.
